# EUROPEAN PATENT APPLICATION

(11) **EP 1 806 596 A1**
(43) Date of publication of application: **11.07.2007**
(21) Application number: 06127382.7
(22) Date of filing: 29.12.2006
(51) Int. Cl.: G01S 13/93, G01S 7/41, G01S 13/58

(54) **Method and system for generating a target alert**

(30) Priority: 30.12.2005 US 322869
(71) Applicant: VALEO RAYTHEON SYSTEMS Inc., Auburn Hills, MI 48326 (US)
(72) Inventor: Lohmeier, Stephen, Westford MA 01886 (US); Wimmer, Wilson, Hudson NH 03051 (US); Woodington, Walter Gordon, Lincoln MA 01773-5115 (US)
(74) Representative: Croonenbroek, Thomas Jakob

(57) **Abstract**

A method of generating a target alert includes combining one or more object detection range values, an object relative velocity value, and a host vehicle velocity value to identify an alert. A system for generating a target alert includes a detection processor to provide one or more detection range values, a transceiver to receive a host vehicle velocity value, a relative velocity calculation processor to calculate a relative velocity value and an alert identification processor to combine the one or more detection range values, the relative velocity value, and the host vehicle velocity value to identify the alert.

## Description

This invention relates generally to vehicle radar systems and more particularly to vehicle radar systems adapted to detect other vehicles and objects in proximity to the vehicle.

As is known by those in the art, radar systems have been developed for various applications associated with vehicles, such as automobiles and boats. A radar system mounted on a vehicle detects the presence of objects including other vehicles in proximity to the vehicle. In an automotive application, such a radar system can be used in conjunction with the braking system to aid in collision avoidance or in conjunction with the automobile cruise control system to provide intelligent speed and traffic spacing control. In a further application, the vehicle radar system provides a passive indication of obstacles to a driver of the vehicle on a display, and in particular, detects objects in a so-called blind spot of the vehicle.

In an effort to reduce the number and impact of blind spots, rear and side view mirrors of various sizes and types are typically mounted on the vehicle. While the use of mirrors helps reduce the number of blind spots on a vehicle, mirrors cannot eliminate all blind spots. Also, the view through mirrors degrades during conditions of rain, snow, or darkness.

Cameras mounted on the back and sides of a vehicle can also be effective in reducing blind spots. However, this approach is relatively expensive and at least a portion of the camera must be exposed to external elements. Also, the view through a camera degrades during severe weather (e.g. rain, show) and in darkness.

The present invention provides a system and method for generating a target alert. While examples of the method and system shown below include a radar system as used on an automobile, and, in particular, a side object detection (SOD) radar, the method and system apply to any radar system that provides an alert associated with an object.

In accordance with the present invention, a method of generating an alert associated with a radar system includes detecting an object when the object is within a predetermined detection zone to provide one or more detection range values indicative of ranges between the radar system and the object. The method further includes receiving a host vehicle velocity value indicative of a velocity of a host vehicle upon which the radar system is mounted and calculating a relative velocity value indicative of a relative velocity between the host vehicle and the detected object. The method further includes combining the one or more detection range values, the relative velocity value, and the host vehicle velocity value to identify the alert.

In accordance with another aspect of the present invention, apparatus for generating an alert associated with a radar system includes a detection processor adapted to detect an object when the object is within a predetermined detection zone and to provide one or more detection range values indicative of ranges between the radar system and the object. The apparatus further includes a transceiver adapted to receive a host vehicle velocity value indicative of a velocity of a host vehicle upon which the radar system is mounted and a relative velocity calculation processor adapted to calculate a relative velocity value indicative of a relative velocity between the object and the host vehicle. The apparatus further includes an alert identification processor adapted to combine the one or more detection range values, the host vehicle velocity value, and the relative velocity value, and to generate an alert identification signal indicative of the alert in response to the combination.

The foregoing features of the invention, as well as the invention itself may be more fully understood from the following detailed description of the drawings, in which:

FIG. 1 is a pictorial of a vehicle on which a side object detection (SOD) radar is mounted, which is traveling on a roadway;

FIG. 2 is a block diagram showing a vehicle on which two SOD radars are mounted;

FIG. 3 is block diagram of a SOD radar;

FIG. 4 is a flow chart showing a method of generating a target alert, which can be provided, for example, by the alert processor of FIG. 3;

FIG. 5 is a flow chart showing an exemplary portion of the method of FIG. 4 in greater detail;

FIG. 6 is a chart (also referred to herein as a map) of host vehicle velocity versus object relative velocity in which four exemplary portions are identified;

FIG. 7 is another chart of host vehicle velocity versus object relative velocity having an exemplary region identified by crosshatching, wherein detection of an object can result in a target alert, for example, according to the process of FIG. 4, when a host vehicle velocity and an object relative velocity occur within the exemplary region;

FIG. 8 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 9 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 10 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 11 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 12 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 13 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 14 is another chart of host vehicle velocity versus object relative velocity having another exemplary region identified by crosshatching, wherein detection of an object can result in a target alert, for example, according to the process of FIG. 4, when a host vehicle velocity and an object relative velocity occur within the exemplary region;

FIG. 15 is a block diagram showing further details of the a side object detection (SOD) radar having an alert processor, which includes a relative velocity calculation processor; and

FIG. 16 is a block diagram showing further details of a relative velocity calculation processor.

Before describing the present invention, some introductory concepts and terminology are explained. As used herein, the term "received RF signal" is used to describe a radio frequency (RF) signal received by a receiving radar antenna. As used herein, the term "transmitted RF signal" is used to describe an RF signal transmitted through a transmitting radar antenna. The transmit and receive antennas may be the same physical antenna (i.e. one antenna is used for both transmit and receive paths of the radar system) or may be separate antennae. As used herein, the term "echo RF signal" is used to describe an RF signal resulting from a transmitted RF signal impinging upon an object and reflecting and/or scattering from the object. As used herein, the term "interfering RF signal " is used to describe an RF signal generated (or otherwise provided by or resultant from) another radar system.

In view of the above definitions, it should be appreciated that a received RF signal may or may not include an echo RF signal. The received RF signal may also include or not include an interfering RF signal.

As used herein, the term "composite signal" is used to describe a signal with contributions from at least one of a received RF signal and a noise signal.

As used herein, the term "chirp signal" (or more simply "chirp") is used to describe a signal having a frequency that varies with time during a time window, and which has a start frequency and an end frequency associated with each chirp. A chirp can be a linear chirp, for which the frequency varies in a substantially linear fashion between the start and end frequencies. A chirp can also be a non-linear chirp, in which the frequency varies in a substantially non-linear fashion between the start and end frequencies. A chirp signal can be transmitted through a variety of media, for example, through the air as a transmitted RF chirp signal, or through some other type of transmission media (e.g. a coaxial cable).

As used herein, the term "controller area network" or "CAN" is used to describe a control bus and associated control processor commonly disposed in automobiles. The CAN bus is typically coupled to a variety of vehicle systems (e.g. air bag, brakes, etc.) A CAN processor is coupled to vehicle systems through the CAN bus which allows the CAN processor to control a variety of automobile functions, for example, anti-lock brake functions. The CAN network may be implemented as a wired or a wireless network.

Reference is made herein below to certain processing operations, which are accomplished using fast Fourier transforms (FFTs). It should, of course, be appreciated that other techniques can also be used to convert time domain signals to the frequency domain. These techniques include, but are not limited to, discrete Fourier transforms (DFTs).

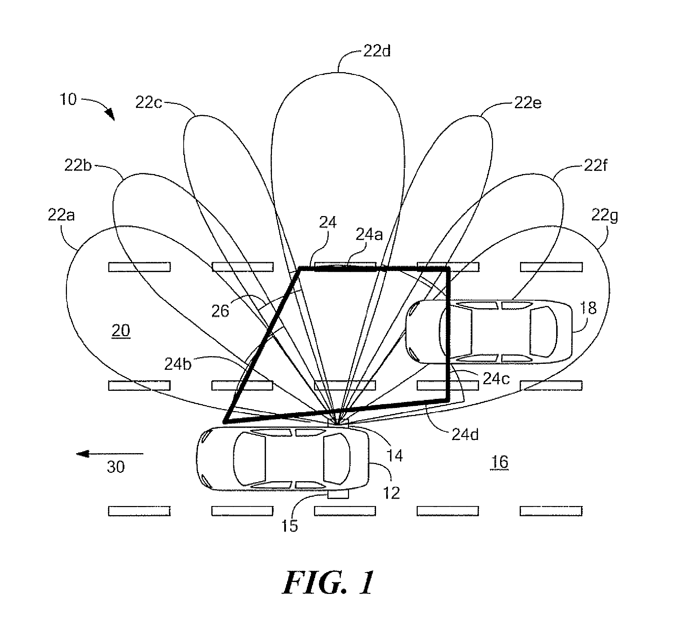

Referring to FIG. 1, a first vehicle 12 traveling in a first traffic lane 16 of a road includes a side object detection (SOD) radar 14. The SOD radar 14 is disposed on a side portion of the vehicle 12 and in particular, the SOD radar 14 is disposed on a right rear quarter of the vehicle 14. The vehicle 12 also includes a second SOD radar 15 disposed on a side portion of a left rear quarter of the vehicle 12. The SOD radars 14, 15 may be coupled to the vehicle 12 in a variety of ways. In some embodiments, the SOD radars may be coupled to the vehicle 12 as described in U.S. Patent 6,489,927, issued December 3, 2002, which is incorporated herein by reference in its entirety. A second vehicle 18 travels in a second traffic lane 20 adjacent to the first traffic lane 16. The first and second vehicles 12, 18 are both traveling in a direction according to an arrow 30 and in the respective first and second traffic lanes 16, 20.

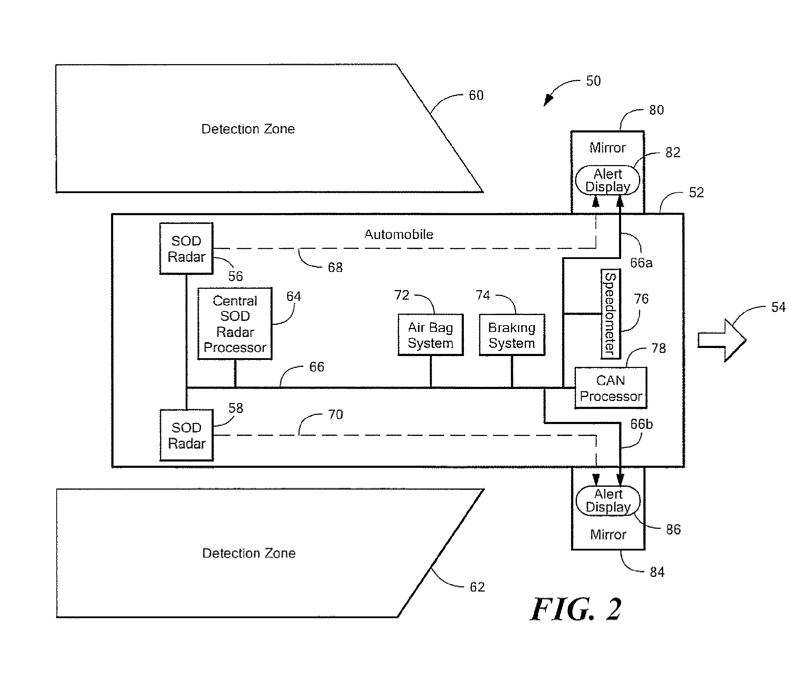

The second vehicle 18 may be traveling slower than, faster than, or at the same speed as the first vehicle 12. With the relative position of the vehicles 12, 18 shown in FIG. 1, the second vehicle 18 is positioned in a "blind spot" of the first vehicle 12. The blind spot is an area located on a side of the first vehicle 12 whereby an operator of the first vehicle 12 is unable to see the second vehicle 18 either through side-view mirrors 80, 84 (see FIG. 2) or a rear-view mirror (not shown) of the first vehicle 12.

The SOD radar 14 generates multiple receive beams (e.g., a receive beam 22a, a receive beam 22b, a receive beam 22c, a receive beam 22d, a receive beam 22e, a receive beam 22f and a receive beam 22g) and an associated detection zone 24 having edges 24a-24d. The edges 24a-24c of the detection zone 24 are formed by the SOD radar 14 by way of maximum detection ranges associated with each one of the receive beams 22a-22g, for example, the maximum detection range 26 associated with the receive beam 22c. Each of the receive beams 22a-22g may also have a minimum detection range (not shown), forming the edge 24d of the detection zone 24 closest to the first vehicle. It should be appreciated that in this exemplary embodiment the detection zone 24 is selected having a size and shape such that at least a portion of the detection zone lies over (or "covers") a blind spot of the vehicle.

In one particular embodiment, the SOD radar 14 is a frequency modulated continuous wave (FMCW) radar, which transmits continuous wave chirp RF signals, and which processes received RF signals accordingly. In some embodiments, the SOD radar 14 may be of a type described, for example, in U.S. Patent Number 6,577,269, issued June 10, 2003; U.S. Patent Number 6,683,557, issued January 27, 2004; U.S. Patent Number 6,642,908, issued November 4, 2003; U.S. Patent Number 6,501,415, issued December 31, 2002; and U.S. Patent Number 6,492,949, issued December 10, 2002, which are all incorporated herein by reference in their entirety.

In operation, the SOD radar 14 transmits an RF signal. At least portions of the transmitted RF signal impinge upon and are reflected from the second vehicle 18. The reflected signals (also referred to as "echo" RF signals) are received in one or more of the receive beams 22a-22g. Other ones of the radar beams 22a-22g, which do not receive the echo RF signal from the second vehicle 18, receive and/or generate other RF signals, for example, noise signals.

In some embodiments, the SOD radar 14 can transmit RF energy in a single broad transmit beam (not shown). In other embodiments, the SOD radar 14 may transmit RF energy in multiple transmit beams (not shown), for example, in seven transmit beams associated with the receive beams 22a-22g. It should be appreciated, of course, that the principles described herein apply regardless of the particular number of receive beams.

The SOD radar 14 processes the received RF signals associated with each one of the receive beams 22a-22g in sequence, in parallel, or in any other time sequence. The SOD radar 14 detects echo RF signals associated with the second vehicle 18 when any portion of the second vehicle 18 is within the detection zone 24. Therefore, the SOD radar 14 is adapted to detect the second vehicle 18 when at least a portion of the second vehicle is in or near the blind spot of the first vehicle 12.

To this end, signal processing provided by the SOD radar 14, in some embodiments, can be of a type described, for example, in U.S. Patent 6,577,269 and U.S. Patent 6,683,557. Further processing of the composite signal by the SOD radar 14 is described more fully below.

Referring now to FIG. 2, an exemplary vehicle radar system 50 is associated with an automobile 52 generally traveling in a direction indicated by the arrow identified by reference numeral 54. It should be appreciated, however, that the system 50 does not include all of the mechanical and electrical aspects of the automobile 52. The system 50 includes one or more SOD radars 56, 58. Each one of the SOD radars 56, 58 can be the same as or similar to the SOD radar 14 of FIG. 1. Accordingly, the SOD radar 56 forms a detection zone 60 and the SOC radar 58 forms a detection zone 62.

As described above, the SOD radars 56, 58 can be coupled to the vehicle 52 in a variety of ways. In some embodiments, the SOD radars can be coupled to the vehicle 52 as described in U.S. Patent 6,489,927, issued December 3, 2002, which is incorporated herein by reference it its entirety.

Each one of the SOD radars 56, 58 can be coupled to a central SOD processor 64 via a Controller Area Network (CAN) bus 66. Other automobile systems can also be coupled to the CAN bus 66, for example, an air bag system 72, a braking system 74, a speedometer 76, and a CAN processor 78.

The system 50 includes two side view mirrors 80, 84, each having an alert display 82, 86, respectively, viewable therein. Each one of the alert displays 82, 86 is adapted to provide a visual alert to an operator of the vehicle 52, indicative of the presence of another automobile or other object in a blind spot of the vehicle 52.

Upon detection of an object (e.g., another vehicle) in the detection zone 24, the SOD radar 56 sends an alert signal indicating the presence of an object to either or both of the alert displays 82, 84 through the CAN bus 66. In response to receiving the alert signal, the displays 82, 84 provide an indicator (e.g., a visual, audio, or mechanical indicator), which indicates the presence of an object. Similarly, upon detection of an object in the detection zone 62, the SOD radar 58 sends an alert signal indicating the presence of another vehicle to one or both of alert displays 82, 86 through the CAN bus 66. However, in an alternate embodiment, the SOD radar 56 can communicate the alert signal to the alert display 82 through a human/machine interface (HMI) bus 68. Similarly, the SOD radar 58 can communicate an alert signal to the other alert display 86 through another human/machine interface (HMI) bus 70.

In some embodiments, the central processor 64 can combine or "fuse" data associated with each one of the SOD radars 56, 58, in order to provide fused detections of other automobiles present within the detections zones 60, 62, resulting is further display information in the alert displays 82, 86. Alternatively, the data from each SOD radar 56, 58 can be shared among all SOD radars 56, 58 and each SOD radar 56, 58 can combine (or fuse) all data provided thereto.

While two SOD radars 56, 58 are shown, the system 50 can include any number of SOD radars, including only one SOD radar. While the alert displays 82, 86 are shown to be associated with side view mirrors, the alert displays can be provided in a variety of ways. For example, in other embodiments, the alert displays can be associated with a central rear view mirror. In other embodiments, the alert displays are audible alert displays (e.g. speakers) disposed inside (or at least audible inside) the portion of the vehicle in which passengers sit..

While the CAN bus 66 is shown and described, it will be appreciated that the SOD radars 56, 58 can couple through any of a variety of other busses within the vehicle 52, including, but not limited to, an Ethernet bus, and a custom bus.

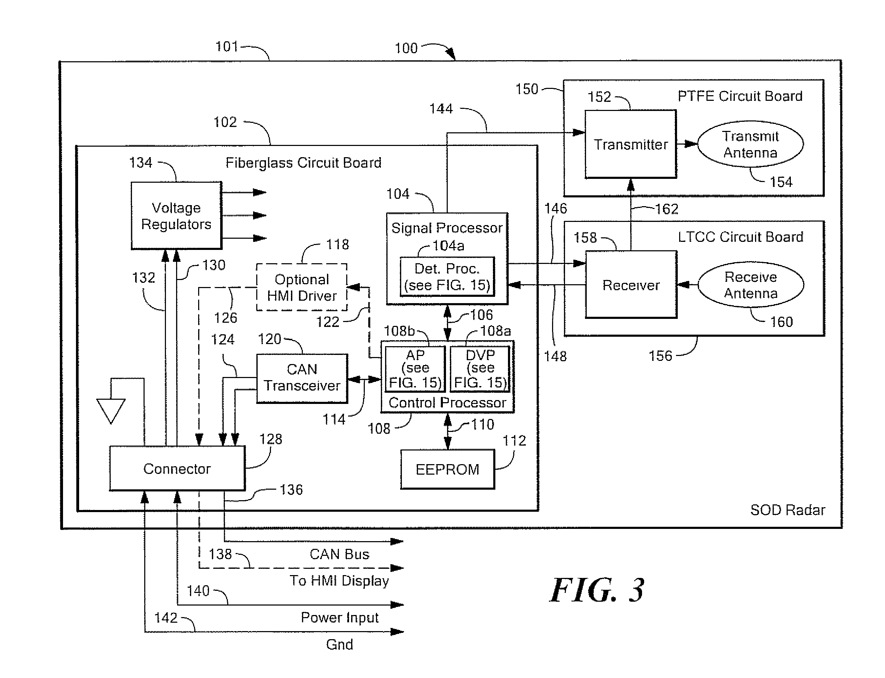

Referring now to FIG. 3, an SOD radar 100 includes a housing 101, in which a fiberglass circuit board 102, a polytetrafluoroethylene (PTFE) circuit board 150, and a low temperature co-fired ceramic (LTCC) circuit board 156 reside. The SOD radar 100 can be the same as or similar to the SOD radars 14, 15, of FIG. 1 and 56, 58 of FIG. 2.

The fiberglass circuit board 102 has disposed thereon a signal processor 104 coupled to a control processor 108. In general, the signal processor 104 is adapted to perform signal processing functions, for example, fast Fourier transforms. The signal processor can include a detection processor 104a adapted to detect targets in the detection zone (e.g., detection zone 24, FIG. 1) of the SOD radar 100.

The control processor 108 is adapted to perform other digital functions, for example, to identify conditions under which an operator of a vehicle on which the SOD radar 100 is mounted should be alerted to the presence of another object such as a vehicle in a blind spot. To this end, the control processor 108 includes a detection verification processor 108a and an alert processor 108b, each of which are descried more fully below.

While the detection processor 104a, the detection verification processor 108a, and the alert processor 108b are shown to be partitioned among the signal processor 104 and control processor 108 in a particular way, any partitioning of the functions is possible.

The control processor 108 is coupled to an electrically erasable read-only memory (EEPROM) 112 adapted to retain a variety of values, for example, threshold values described more fully below. Other read-only memories associated with processor program memory are not shown for clarity.

The control processor 108 can also be coupled to a CAN transceiver 120, which is adapted to communicate, via a connector 128, on a CAN bus 136. The CAN bus 136 can be the same as or similar to the CAN bus 66 of FIG. 2.

The control processor 108 can also be coupled to an optional human/machine interface (HMI) driver 118, which can communicate via the connector 128 to an HMI bus 138. The HMI bus 138 can be the same as or similar to the HMI busses 68, 70 of FIG. 2. The HMI bus 138 can include any form of communication media and communication format, including, but not limited to, a fiberoptic media with an Ethernet format, and a wire media with a two-state format.

The fiberglass circuit board 102 receives a power signal 140 and a ground signal 142. In a U.S. automobile, the power signal 140 would typically be provided as a 12 Volt DC signal (relative to the ground signal 142). The system may of course be adapted to use other voltage levels (e.g. voltage levels used in European automobiles). Via the connector 128, the power and ground signals 140,142, respectively, can be coupled to one or more voltage regulators 134 (only voltage regulator one being shown in FIG. 3 for clarity), which can provide one or more respective regulated voltages to the SOD radar 100.

The SOD radar 100 also includes the PTFE circuit board 150, on which is disposed radar transmitter 152 and a transmit antenna 154, which is coupled to the transmitter 154. The transmitter 152 is coupled to the signal processor 104 and the antenna 154 is coupled to the transmitter 152.

The SOD radar 100 also includes the LTCC circuit board 156 on which is disposed a radar receiver 158 and a receive antenna 160. The receiver 158 is coupled to the signal processor 104 and to the receive antenna 160. The receiver 158 can also be coupled to the transmitter 152, providing one or more RF signals 162 described below. The radar transmitter 152 and the radar receiver 158 receive regulated voltages from the voltage regulator 134.

In some embodiments, the transmit antenna 154 and the receive antenna 160 can be of a type described, for example, in U.S. Patent 6,642,908, issued November 4,2003, U.S. Patent 6,492,949, issued December 10, 2002, U.S. Patent application number 10/293,880, filed November 13, 2002, and U.S. Patent application 10/619,020, filed July 14, 2003. Each of these patents is incorporated herein by reference in its entirety.

In operation, the signal processor 104 generates one or more ramp signals 144 (also referred to as chirp control signals), each having a respective start voltage and a respective end voltage. The ramp signals are fed to the transmitter 152. In response to the ramp signals 144, and in response to RF signals 162 provided by the receiver 158, the transmitter 152 generates RF chirp signals having waveform characteristics controlled by the ramp signals. The RF signals are provided from the transmitter to the transmit antenna 154, where the signal is emitted (or radiated) as RF chirp signals.

The transmit antenna 154 can be configured such that the RF chirp signals are transmitted in a single transmit beam. Alternatively, the transmit antenna can be configured such that the RF chirp signal is emitted in more than one transmit beam. In either arrangement, the transmit antenna 154 transmits the RF chirp signal in an area generally encompassing the extent of a desired detection zone, for example, the detection zone 60 of FIG. 2.

The receive antenna 160 can form more than one receive beam, for example, seven receive beams 22a-22g as shown in FIG. 1. In other embodiments, 5, 6, 8, 9, 10 or 11 beams may be used. In still other embodiments, any number of beams fewer than 7 beams or more than 7 beams can be used. Regardless of the particular number of beams, each of the receive beams, or electronics associated therewith, receives composite signals, which include at least one of received RF signals and noise signals. Signals received by the receive beams are coupled from the antenna to the radar receiver 158. The radar receiver 158 performs a variety of functions, including, but not limited to, amplification, down converting received RF signals to provide a baseband signal, and analog-to-digital (A/D) conversion of the baseband signal, resulting in a converted signal 148.

It should be appreciated that, for the SOD FMCW chirp radar system 100, the converted signal 148 has a frequency content, wherein different frequencies of peaks therein correspond to detected objects at different ranges. The above-described amplification of the receiver 158 can be a time-varying amplification, controlled, for example, by a control signal 146 provided by the signal processor 104.

The signal processor 104 analyzes the converted signals 148 to identify an object in the above-described detection zone. To this end, in one particular embodiment, the signal processor 104 performs a frequency domain conversion of the converted signals 148. In one exemplary embodiment, this is accomplished by performing an FFT (fast Fourier transform) in conjunction with each one of the receive beams.

Some objects detected in the converted signal 148 by the signal processor 104 may correspond to objects for which an operator of a vehicle has little concern and need not be alerted. For example, an operator of a vehicle may not need to be alerted as the existence of a stationary guardrail along a roadside. Thus, further criteria can be used to identify when an alert signal should be generated and sent to the operator.

The control processor 108 receives detections 106 from the signal processor 104. The control processor 108 can use the further criteria to control generation of an alert signal 114. Upon determination by the control processor 108, the alert signal 114 can be generated, which is indicative not only of an object in the detection zone, but also is indicative of an object having predetermined characteristics being in the detection zone, for example, a moving object. Alternatively, the control processor 104 can use criteria to determine that an alert signal should not be generated.

The alert signal 114 can be communicated on the CAN bus 136 by the CAN transceiver 120. In other embodiments, an alert signal 122 can be communicated on the HMI bus 138 by the optional HMI driver 118.

The fiberglass circuit board 102, the PTFE circuit board 150, and the LTCC circuit board 156 are comprised of materials having known characteristics (including but not limited to insertion loss characteristics) for signals within particular frequency ranges. It is known, for example, that fiberglass circuit boards have acceptable signal carrying performance at signal frequencies up to a few hundred MHz. LTCC circuit boards and PTFE circuit boards are know to have acceptable signal carrying performance at much higher frequencies, however, the cost of LTCC and PTFE boards is higher than the cost of fiberglass circuit boards. Thus, the lower frequency functions of the SOD radar 100 are disposed on the fiberglass circuit board 102, while the functions having frequencies in the range of frequencies are disposed on the LTCC and on the PTFE circuit boards 150, 156, respectively.

While three circuit boards 102, 150, 156 are shown, the SOD radar 100 can be provided on more than three or fewer than three circuit boards. Also, the three circuit boards 102, 150, 156 can be comprised of materials other than those described herein.

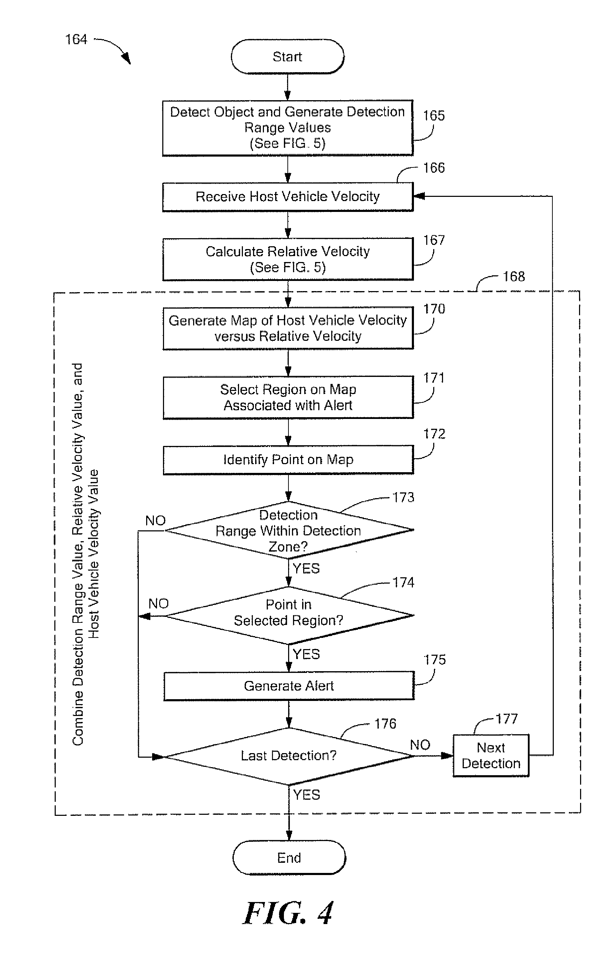

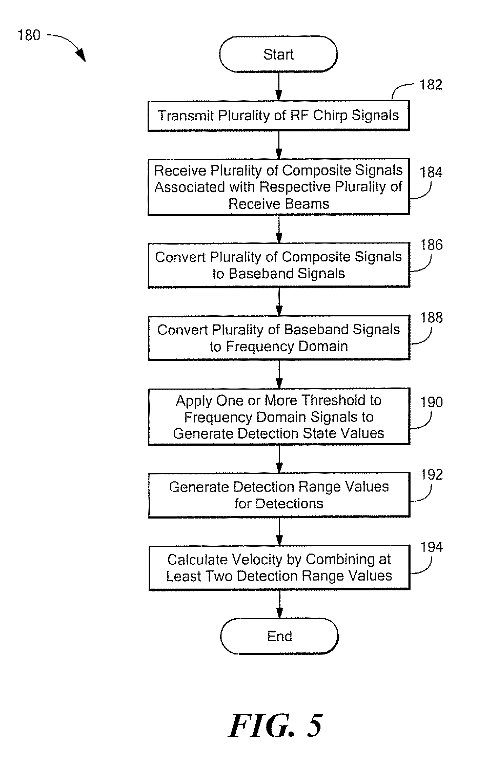

It should be appreciated that FIGS. 4 and 5 show flowcharts corresponding to the below contemplated technique which would be implemented in computer system 100 (FIG. 3). Rectangular elements (typified by element 166 in FIG. 4), herein denoted "processing blocks," represent computer software instructions or groups of instructions. Diamond shaped elements (typified by element 172 in FIG. 4), herein denoted "decision blocks," represent computer software instructions, or groups of instructions, which affect the execution of the computer software instructions represented by the processing blocks.

Alternatively, the processing and decision blocks represent steps performed by functionally equivalent circuits such as a digital signal processor circuit or an application specific integrated circuit (ASIC). The flow diagrams do not depict the syntax of any particular programming language. Rather, the flow diagrams illustrate the functional information one of ordinary skill in the art requires to fabricate circuits or to generate computer software to perform the processing required of the particular apparatus. It should be noted that many routine program elements, such as initialization of loops and variables and the use of temporary variables are not shown. It will be appreciated by those of ordinary skill in the art that unless otherwise indicated herein, the particular sequence of blocks described is illustrative only and can be varied without departing from the spirit of the invention. Thus, unless otherwise stated the blocks described below are unordered meaning that, when possible, the steps can be performed in any convenient or desirable order.

Referring now to FIG. 4, a method 164 of generating an alert associated with a radar system, for example, the SOD radar 100 of FIG. 3, begins at block 165 where an object is detected, providing one or more detection range values indicative of ranges between the radar system and the object.

In general, different radars operate in different ways. In the discussion herein, a SOD radar is described (e.g., 100, FIG. 3), which transmits RF chirp signals and which receives composite signals, which may or may not include echo **RF** signals associated with an object. In some embodiments, the echo RF signal can be down-converted in frequency and then converted to the frequency domain. Detections of objects can be made in the frequency domain as described above in conjunction with FIG. 3. However, other radars can operate in other ways to detect an object and to provide detection ranges to the object.

At block 166, a host vehicle velocity, e.g., a host automobile velocity, is received by the SOD radar. For example, the SOD radar 56 of FIG. 2 can receive the host vehicle velocity from the speedometer 76 via the CAN processor 78 and via the CAN bus 66.

At block 167, an object relative velocity value is calculated, which is indicative of a relative velocity between the host vehicle and the detected object. The relative velocity value can be calculated in a variety of ways, some of which are further described below.

At block 168, which includes blocks 170-177 described more fully below, the one or more detection range values, the relative velocity value, and the host vehicle velocity value are combined to generate an alert.

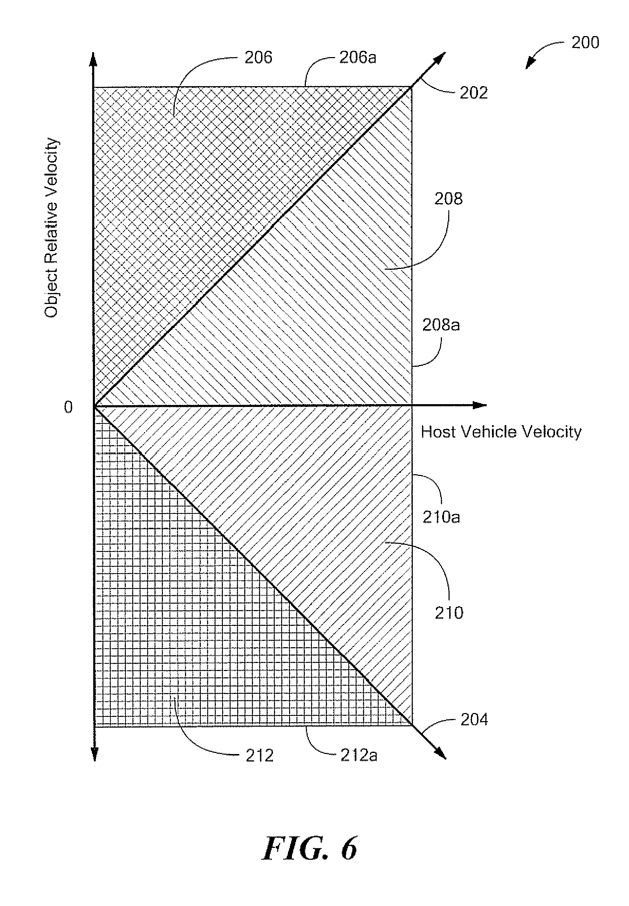

At block 170, a map of host vehicle velocities versus object relative velocities is generated, wherein the map has a map area. Referring briefly to FIG. 6, a map 200 is such a map. It will be recognized that the map 200 has a map area. The host vehicle is a vehicle upon which the SOD radar is mounted and the object is any object in the vicinity of the vehicle, for example, an object within one of the detection zones 60, 62 of FIG. 2, which is detected by the SOD radar. The detected object can be a moving object, for example, another automobile, or it can be a stationary object, for example, a guardrail along the roadway.

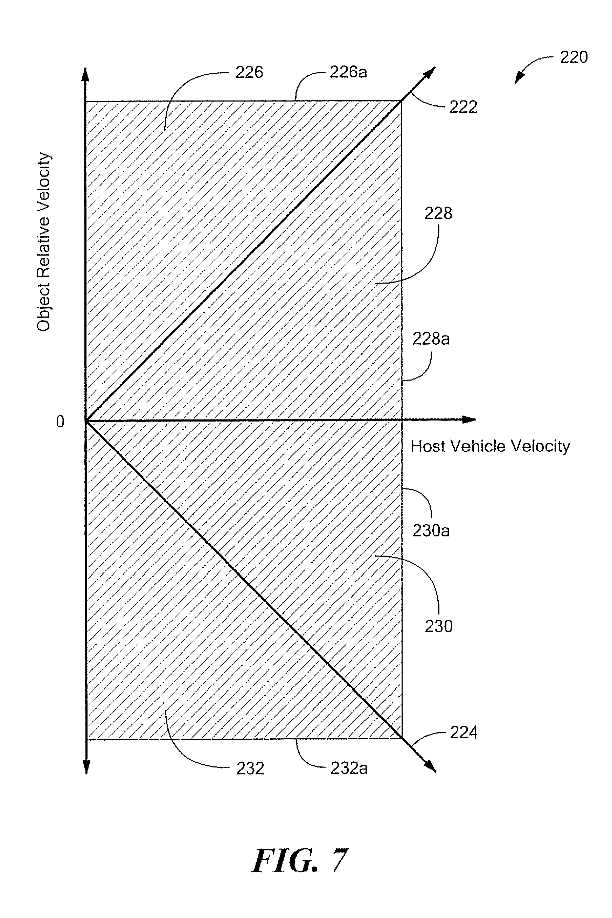

Referring again to FIG. 4, a region on the map is selected at block 171, wherein the region has a region area less than the map area. The selected region area can have one of a variety of shapes. Some exemplary shapes are described below in conjunction with FIGS. 7-14.

Having both the object relative velocity from block 167 and the host vehicle velocity from block 166, at block 172, a point is identified on the map generated at block 170.

At block 173, a detection range value associated with the obj ect detection, and therefore, with the point generated at block 172, is examined to determine if the detection range value, i.e., the object, is within a predetermined detection zone. The predetermined detection zone can be the same as or similar to the detection zone 24 of FIG. 1. If the detection range value is indicative of the detected object being within the predetermined detection zone, then the process continues to block 174.

The point generated at block 172 is examined at block 174. If the point is within the map region selected at block 171, then the process continues to block 175, where an alert is identified and generated. The alert can be in the form of a display, for example the alert display 82 of FIG. 2. However, in other embodiments the alert can be any form of visual, audible, or tactile alert.

Having generated the alert, the process continues to block 177, where if the detection being examined (which ca, for example, be associated with a particular radar receive beam) is the last available detection, the process ends. If, however, the detection is not the last detection, the process continues to block 177, where the next detection (for example, the next receive beam having a detection) is selected. The next detection has an associated range to a target. The process then returns to block 166.

At block 173, if the detection range value (i.e., detected object) is not within the predetermined detection zone (e.g., 24, FIG. 1), then an alert is not generated and the process continues at block 176.

At block 174, if the identified point is not within the region selected at block 162 of the map generated at block 179, then an alert is not generated and the process continues at block 176.

Referring now to FIG. 5, a method 180 of determining a relative velocity of an object, which can be used to provide the relative velocity at block 156 of FIG. 4, begins at block 182, where a plurality of RF chirp signals are transmitted, for example, with the SOD radar 100 of FIG. 3. At block 184, a respective plurality of composite signals are received by the SOD radar 100, wherein at least some of the plurality of composite signals include echo RF signals associated with an object (or target).

At block 186, the plurality of composite signals is converted to a respective plurality baseband signals, i.e., signals at a lower frequency. At block 188, the baseband signals are converted to the frequency domain, and at block 190, thresholds are applied to the frequency domain signals to generate one or more detections of the object and a respective one or more detection state values, for example, true or false detection state values.

At block 192, for each detection of the object, i.e., for each true detection state value, a detection range value is generated. At least two detections and at least two respective detection range values are generated. At block 194, the at least two detection range values are combined to generate a relative velocity between the detected object and the SOD radar system.

The relative velocity can be computed at block 194 by dividing a change in distance directly identified by the detection range values, by an associated change in time. However, the relative velocity thus calculated will be direct path relative velocity along a line (a direct path) between the object and the radar system (host vehicle). In some embodiments, the direct path relative velocity is converted at block 194 to a coordinate parallel to a direction of travel of the host vehicle, thereby providing a parallel path relative velocity. This conversion can be performed with knowledge of the angle between the detected object and the direction of travel of the host vehicle, which can be provided by knowledge of which one of the receive beams (e.g., 22a-22g, FIG. 1) provided the detection being processed.

In other embodiments, relative velocity can be directly calculated using a Doppler frequency shift, without using the measured change in distance described above. Calculating a relative velocity in a radar system by way of Doppler shift is known. In these embodiments, only one detection of the object is required in order to generate the object relative velocity.

Further details of the above-described generation of detection state values and detection range values are described in the above-mentioned U.S. Patent 6,577,269, issued June 10, 2003, and U.S. Patent 6,683,557, issued January 27, 2004, which patents are incorporated herein by reference in their entirety.

While processing associated with an FMCW radar such as the SOD radar 100 of FIG. 3 is described above, it should be appreciated that other radar systems provide other types of processing. However, most radar systems are adapted to generate detection range values associated with a target. For the other radar systems, the detection range values can be similarly combined as described above to generate a direct path relative velocity, which can be transformed to provide a parallel path relative velocity. Similarly, some other radar systems can measure the above-described Doppler frequency shift, which can be used to calculate the direct path relative velocity accordingly.

Referring now to FIGS. 6-14, maps 200, 220, 240, 260, 280, 300, 320, 340, 360 have horizontal axes in units of velocity of a host vehicle on which a radar system is mounted and vertical scales in units of relative velocity of an object relative to the host vehicle. The object relative velocity can be either a direct path relative velocity or a parallel path relative velocity, both of which are described above. For the discussion below, it will be presumed that the object relative velocity is the above-described parallel path relative velocity.

In discussion of FIGS 6-14 below, it is described that regions indicative of particular relative velocities of a detected object and with particular host vehicle velocities can be used to generate an alert. It will be understood that in order to make use any of the below-described regions, a detected object should be within or near to a predetermined detection zone, for example the detection zone 24 of FIG. 1. This characteristic is discussed above in conjunction with block 173 of FIG. 4.

Referring now to FIG. 6, a line 202 is indicative of the velocity of the host vehicle being the same as the object relative velocity. It will be recognized that when the host vehicle velocity and the object relative velocity are equal, the object must be traveling in the same direction and at twice the velocity as the host vehicle.

A line 204 is indicative of the velocity of the host vehicle being opposite from the object relative velocity. It will be recognized that when the host vehicle velocity and the object relative velocity are opposite, the object must be stationary.

The horizontal axis is indicative of the object relative velocity being equal to zero. It will be recognized that when the object relative velocity is zero, the object is traveling at the same velocity and in the same direction as the host vehicle.

The vertical axis is indicative of the host vehicle being stationary and the object moving.

Regions 206 and 208 are both representative of the object moving faster and in the same direction as the host vehicle. The region 206 is representative of the object moving more than twice the velocity of the host vehicle, and the region 208 is representative of the object moving less than twice but greater than the velocity of the host vehicle. A region 210 is representative of the object moving slower and in the same direction as the host vehicle. A region 212 is representative of the object moving in the opposite direction from the host vehicle, for example, in a an opposite direction travel lane.

Referring now to FIG. 7, a map 220 has a region (including regions 226-232), which is shown to be crosshatched. The crosshatching is representative of an alert being generated, here for all combinations of host vehicle velocity and object relative velocity. It will be recognized that this arrangement might not be desirable. For example, a host vehicle velocity/object relative velocity combination that falls on the line 224, might be indicative of detection of a stationary guard rail or of a tree.

For a side-object detection system such as the SOD radar 100 of FIG. 3, it is generally not desirable to generate an alert to an operator of the host vehicle indicating the presence of a stationary object. Instead, it is desirable to generate an alert only of another vehicle in the blind spot of the host vehicle, when both the host vehicle and the object are moving.

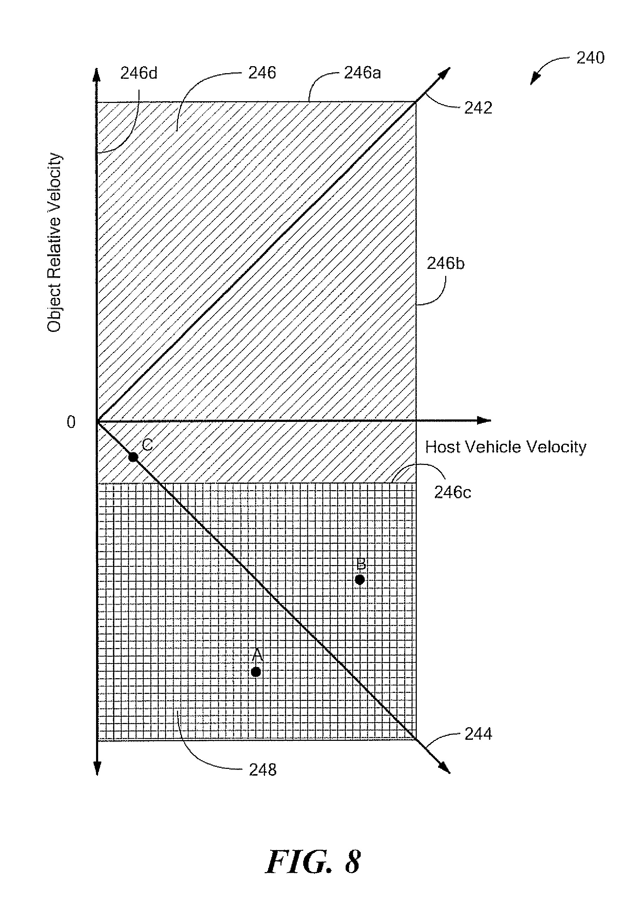

Referring now to FIG. 8, a map 240 has a region 246, which is shown to be crosshatched. The crosshatching is representative of an alert being generated for any combination of host vehicle velocity and object relative velocity (i.e., a point) falling within the region 246, here for only some of the combinations of host vehicle velocity and object relative velocity. A region 248, which is shown to be crisscross hatched, is representative of no alert being generated for any combination of host vehicle velocity and object relative velocity falling within the region 248.

The region 246 is a rectangular region bounded by a predetermined range of object relative velocity values (line segment 246a to line segment 246c) and a predetermined range of host vehicle velocity values (line segment 246d to line segment 246b).

If a vehicle operator is alerted only if a host vehicle velocity and an object relative velocity result in an associated point falling within the region 246, certain advantages result. For example, some objects traveling in the opposite direction to the host vehicle (typified by a point A) and some objects traveling at a slower velocity and in the same direction as the host vehicle (typified by a point B) do not result in an alert. However, some stationary objects (typified by a point C) result in an alert, when such an alert may not be desirable.

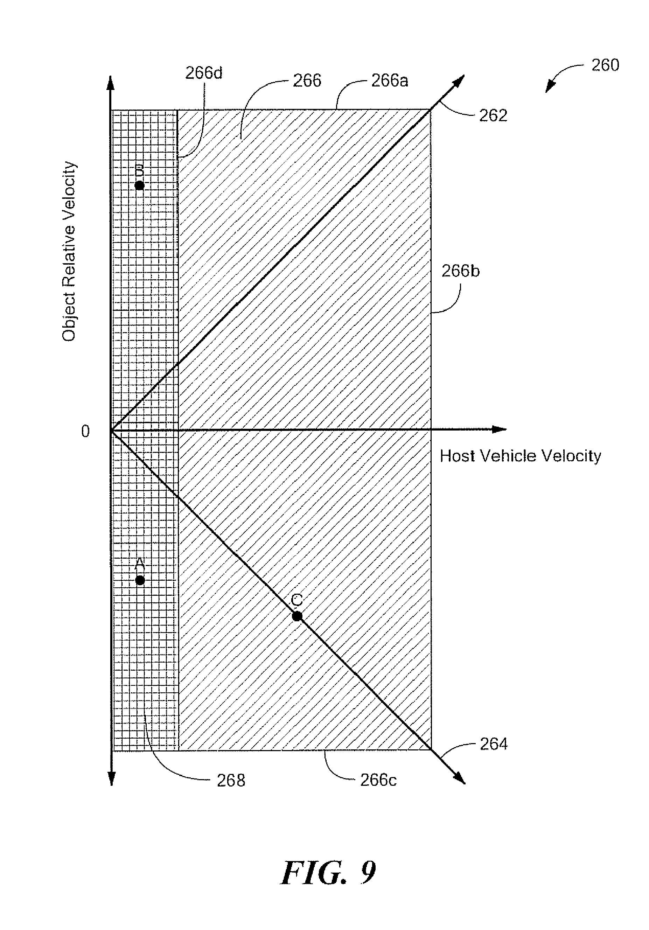

Referring now to FIG. 9, a map 260 has a region 266, which is shown to be crosshatched. The crosshatching is representative of an alert being generated for any combination of host vehicle velocity and object relative velocity falling within the region 266, here for only some of the combinations of host vehicle velocity and object relative velocity. A region 268, which is shown to be crisscross hatched, is representative of no alert being generated for any combination of host vehicle velocity and object relative velocity falling within the region 268.

The region 266 is a polygonal region bounded by a line segment 266d having a first predetermined host vehicle velocity value along the line segment 266d, a line segment 266a having a first predetermined relative velocity value along the line segment 266a, a line segment 266b having a second predetermined host vehicle velocity value along the line segment 266b, and a line segment 266c having a second predetermined relative velocity value along the line segment 266c.

If a vehicle operator is alerted only if a host vehicle velocity and an object relative velocity result in an associated point being within the region 266, certain alert characteristics result. For example, some objects traveling in the opposite direction to the host vehicle (typified by a point A) and some objects traveling at a much faster velocity and in the same direction as the host vehicle (typified by a point B) do not result in an alert. However, some stationary objects (typified by a point C) result in an alert, when such an alert may not be desirable.

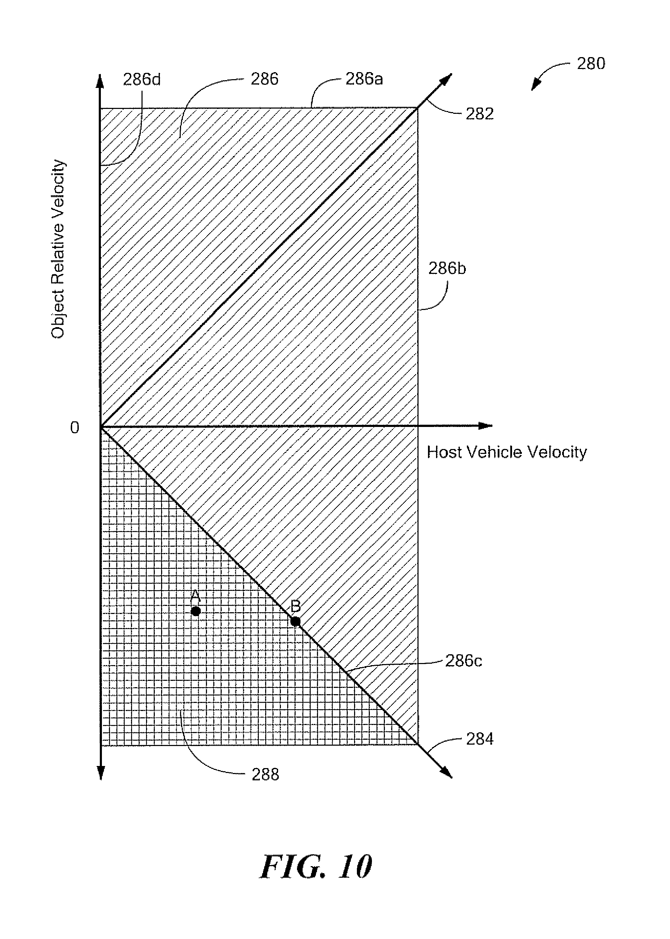

Referring now to FIG. 10, a map 280 has a region 286, which is shown to be crosshatched. The crosshatching is representative of an alert being generated for any combination of host vehicle velocity and object relative velocity falling within the region 286, here for only some of the combinations of host vehicle velocity and object relative velocity. A region 288, which is shown to be crisscross hatched, is representative of no alert being generated for any combination of host vehicle velocity and object relative velocity falling within the region 288.

The region 286 is a polygonal region bounded by a line segment 286d having a host vehicle velocity value equal to zero along the line segment 286d, a line segment 286a having a predetermined relative velocity value along the line segment 286a, a line segment 286b having a predetermined host vehicle velocity value along the line segment 286b, and a line segment 286c for which the relative velocity values along the line segment 286c are equal to the opposite of the host vehicle velocity values (i.e., the object is stationary).

If a vehicle operator is alerted only if a host vehicle velocity and an object relative velocity result in an associated point being within the region 286, certain alert characteristics result. For example, all objects traveling in the opposite direction to the host vehicle (typified by a point A) do not result in an alert. However, some stationary objects (typified by a point B) result in an alert, when such an alert may not be desirable.

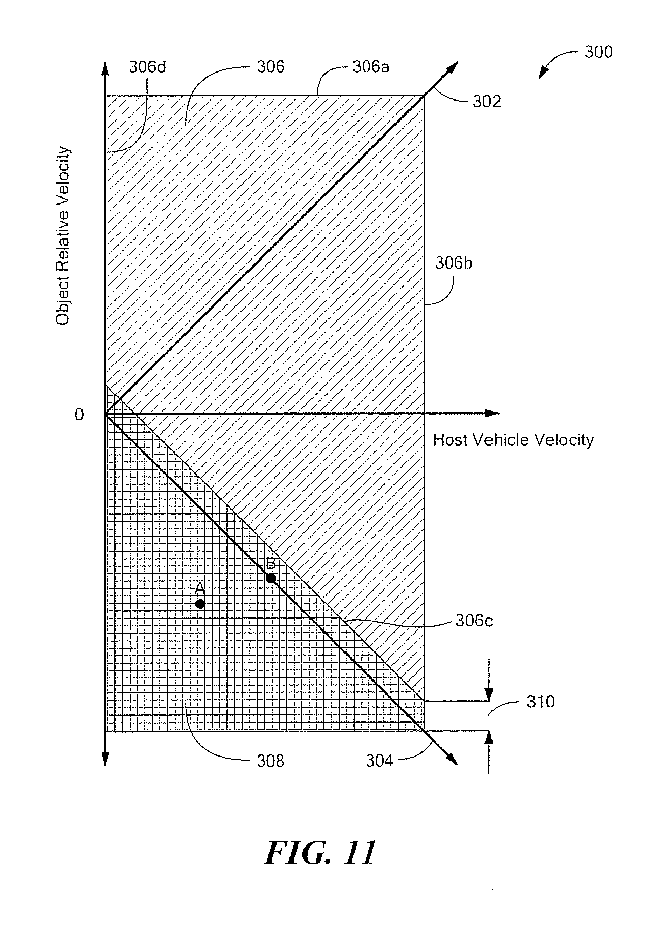

Referring now to FIG. 11, a map 300 has a region 306, which is shown to be crosshatched. The crosshatching is representative of an alert being generated for any combination of host vehicle velocity and object relative velocity falling within the region 306, here for only some of the combinations of host vehicle velocity and object relative velocity. A region 308, which is shown to be crisscross hatched, is representative of no alert being generated for any combination of host vehicle velocity and object relative velocity falling within the region 308.

The region 306 is a polygonal region bounded by a line segment 306d having a host vehicle velocity value equal to zero along the line segment 306d, a line segment 306a having a predetermined relative velocity value along the line segment 306a, a line segment 306b having a predetermined host vehicle velocity value along the line segment 306b, and a line segment 306c for which the relative velocity values along the line segment 306c are equal to the opposite of the host vehicle velocity values plus a predetermined offset relative velocity value 310 (i.e., the object is not stationary).

If a vehicle operator is alerted only if a host vehicle velocity and an object relative velocity result in an associated point being within the region 306, certain alert characteristics result. For example, all objects traveling in the opposite direction to the host vehicle (typified by a point A) do not result in an alert. Also, in comparison with the region 286 of FIG. 10, no stationary objects (typified by a point B) result in an alert.

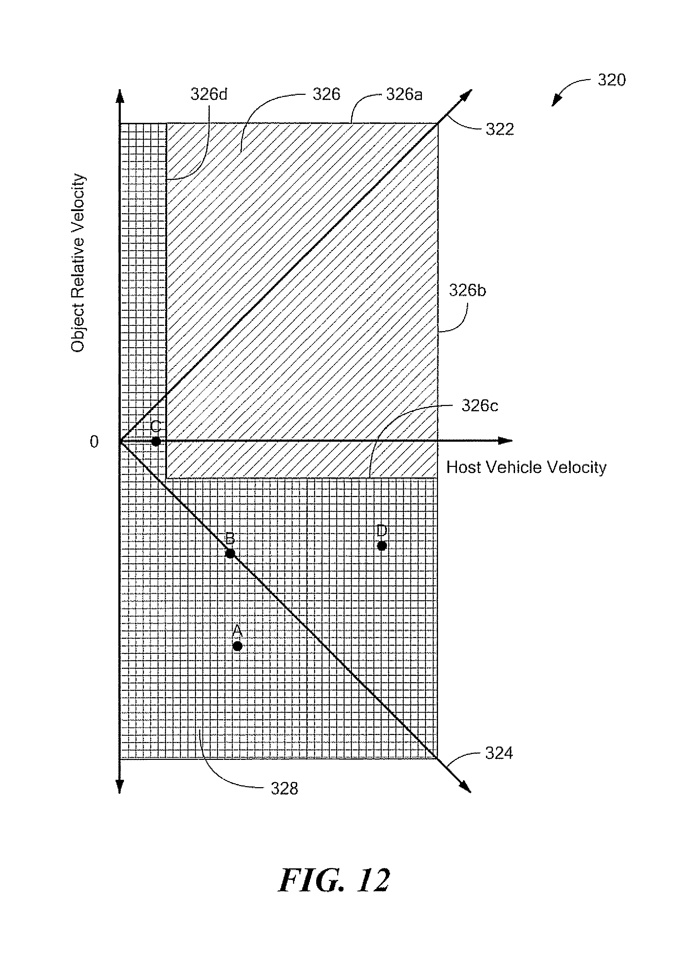

Referring now to FIG. 12, a map 320 has a region 326, which is shown to be crosshatched. The crosshatching is representative of an alert being generated for any combination of host vehicle velocity and object relative velocity falling within the region 326, here for only some of the combinations of host vehicle velocity and object relative velocity. A region 328, which is shown to be crisscross hatched, is representative of no alert being generated for any combination of host vehicle velocity and object relative velocity falling within the region 328.

The region 326 is a polygonal region bounded by a line segment 326d having a first predetermined host vehicle velocity value along the line segment 326d, a line segment 326a having a first predetermined relative velocity value along the line segment 326a, a line segment 326b having a second predetermined host vehicle velocity value along the line segment 326b, and a line segment 326c having a second predetermined relative velocity value along the line segment 326c.

If a vehicle operator is alerted only if a host vehicle velocity and an object relative velocity result in an associated point being within the region 326, certain alert characteristics result. For example, all objects traveling in the opposite direction to the host vehicle (typified by a point A) do not result in an alert. Also, no stationary objects (typified by a point B) result in an alert. Also, no alerts are generated for very low host vehicle velocities (typified by a point C). Furthermore, many objects traveling in the same direction as the host vehicle but slower (typified by a point D), do not result in an alert.

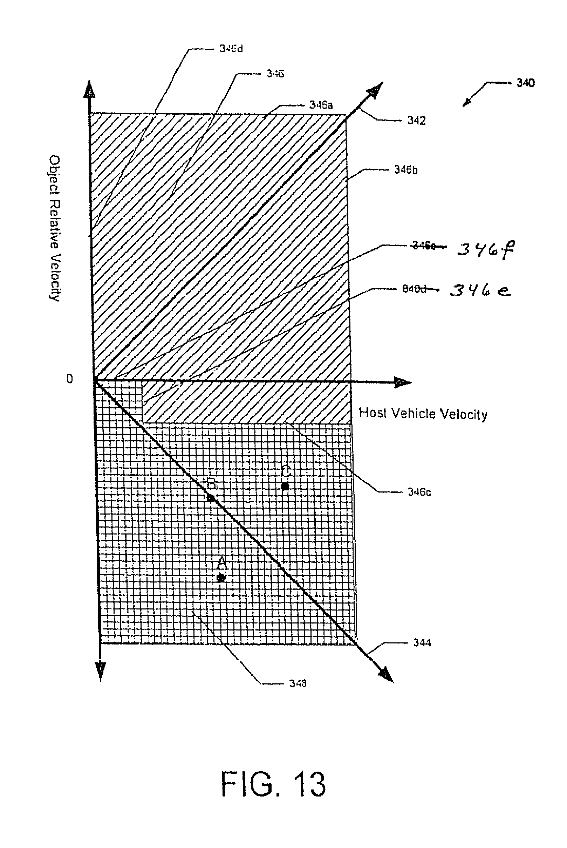

Referring now to FIG. 13, a map 340 has a region 346, which is shown to be crosshatched. The crosshatching is representative of an alert being generated for any combination of host vehicle velocity and object relative velocity falling within the region 346, here for only some of the combinations of host vehicle velocity and object relative velocity. A region 348, which is shown to be crisscross hatched, is representative of no alert being generated for any combination of host vehicle velocity and object relative velocity falling within the region 348.

The region 346 is a polygonal region bounded by a line segment 346d having a host vehicle velocity value equal to zero along the line segment 346d, a line segment 346a having a first predetermined relative velocity value along the line segment 346a, a line segment 346b having a first predetermined host vehicle velocity value along the line segment 346b, a line segment 346c having a second predetermined relative velocity value along the line segment 346c, a line segment 346d having a second predetermined host vehicle velocity value along the line segment 346d, and a line segment 346e having a third predetermined relative velocity value along the line segment 346e, here zero.

If a vehicle operator is alerted only if a host vehicle velocity and an object relative velocity result in an associated point being within the region 346, certain alert characteristics result. For example, all objects traveling in the opposite direction to the host vehicle (typified by a point A) do not result in an alert. Also, no stationary objects (typified by a point B) result in an alert. Furthermore, many objects traveling in the same direction as the host vehicle, but slower (typified by a point C) do not result in an alert.

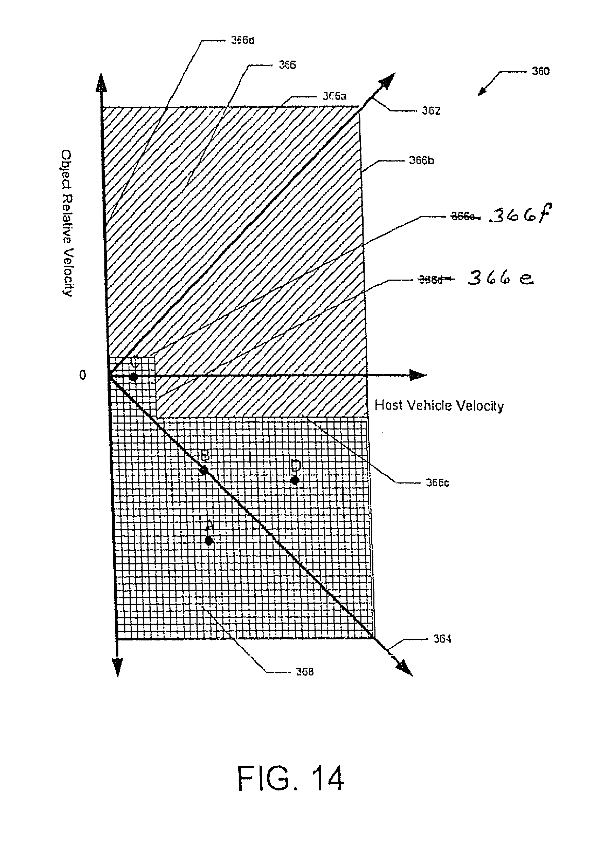

Referring now to FIG. 14, a map 360 has a region 366, which is shown to be crosshatched. The crosshatching is representative of an alert being generated for any combination of host vehicle velocity and object relative velocity falling within the region 366, here for only some of the combinations of host vehicle velocity and object relative velocity. A region 368, which is shown to be crisscross hatched, is representative of no alert being generated for any combination of host vehicle velocity and object relative velocity falling within the region 368.

The region 366 is a polygonal region bounded by a line segment 366d having a host vehicle velocity value equal to zero along the line segment 366d, a line segment 366a having a first predetermined relative velocity value along the line segment 366a, a line segment 366b having a first predetermined host vehicle velocity value along the line segment 366b, a line segment 366c having a second predetermined relative velocity value along the line segment 366c, a line segment 366d having a second predetermined host vehicle velocity value along the line segment 366d, and a line segment 346e having a third predetermined relative velocity value along the line segment 346e.

If a vehicle operator is alerted only if a host vehicle velocity and an object relative velocity result in an associated point being within the region 366, certain alert characteristics result. For example, all obj ects traveling in the opposite direction to the host vehicle (typified by a point A) do not result in an alert. Also, no stationary objects (typified by a point B) result in an alert. Also, no alerts are generated at some low host vehicle velocities (typified by a point C). Furthermore, many objects traveling in the same direction as the host vehicle, but slower (typified by a point D) do not result in an alert.

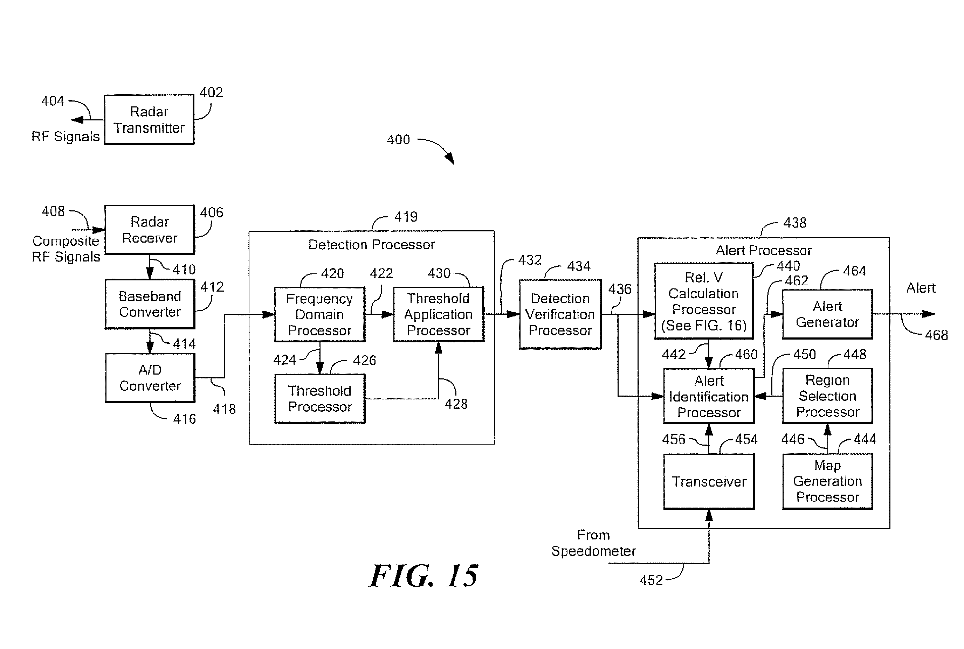

Referring now to FIG. 15. a SOD radar 400 can be the same as or similar to the SOD radar 100 of FIG. 3. The SOD radar 400 includes a radar transmitter 402 adapted to generate chirp RF signals 404. The radar transmitter 402 can be the same as or similar to the transmitter 152 and transmit antenna 154 of FIG. 3. The SOD radar 400 also includes a radar receiver 406 adapted to receive composite signals 408, which can include echo RF signals.

The radar receiver 408 can provide radio frequency (RF) signals 410 to a baseband converter 412. The baseband converter 412 is adapted to convert the RF signals 410 to baseband signals 414, which are provided to an A/D converter 416. The baseband signals 414 are generated by converting the RF signals 412 to a lower frequency. The radar receiver 406 in combination with the baseband converter 412 and the A/D converter 416 can be the same as or similar to the receiver 158 and receive antenna 160 of FIG. 3.

The A/D converter 416 provides digital signals 418 to a detection processor 419. The detection processor 419 can be the same as or similar to the detection processor 104a of FIG. 3. The detection processor 419 is representative of functions that can be performed by the signal processor 104 and/or the control processor 108 of FIG. 3.

The detection processor 419 includes a frequency domain processor 420 adapted to receive the digital signals 418 and to convert the digital signals 418 to frequency domain signals 422, 424. The frequency domain signals 424 are received by a threshold processor 426, which generates one or more detection thresholds 428. The frequency domain signals 422 and the detection thresholds 428 are received by a threshold application processor 430. The threshold application processor 430 is adapted to compare the frequency domain signals 422 with the detection thresholds 428 and to provide a detection signal 432 (i.e., a detection table) indicative of the presence or absence of an object in a detection zone (e.g. 24, FIG. 1), also referred to herein as a field of view (FOV), of the SOD radar 400. The detection signals 432 can include detection state values, e.g., true and false values, and can also include detection range values, wherein each true detection state value is associated with a respective detection range value.

An optional detection verification processor 434 is adapted to receive the detection signals 432 and to further process the detection signals 432 in order to apply further criteria to validate or to invalidate a detection of an object. The detection verification processor 434 can generate verified detection signals 436, accordingly, which can include verified detection state values, e.g., verified true and false values, and can also include detection range values. The detection verification processor 434 can be the same as or similar to the detection verification processor 108a of FIG. 3.

An alert processor 438 is adapted to receive the verified detection signals 436 and to generate an alert signal 468, if a detected object falls within a predetermined detection zone (e.g., 24, FIG.1) and if a combination of host vehicle velocity and detected object relative velocity falls within a predetermined region of a map of host vehicle velocities and detected object relative velocities. For example, the map can be one of the maps 220, 240, 260, 280, 300, 320, 340, 360, 380 shown in FIGS. 7-14 and the region can be one of the regions (226-232), 246, 266, 286, 306, 326, 346, 366, 386, respectively. The alert processor 438 can be the same as or similar to the alert processor 108b of FIG. 3.

The alert processor 438 can include a relative velocity calculation processor 440, adapted to receive the verified detection signals (which can include detection state values and detection range values), and to generate object relative velocity values 442.

A transceiver 454 is adapted to receive host vehicle velocity values 452, for example, from the host vehicle speedometer, and to provide the host vehicle velocity 456 to the alert processor 438. For example, the SOD radar 56 of FIG. 2 can receiver the host vehicle velocity from the speedometer 76 via the CAN processor 78 and via the CAN bus 66.

A map generation processor 444 is adapted to generate a map of host vehicle velocity and object relative velocity, and a region selection processor 448 is adapted to select a predetermined region 450 of the map. For example, as described above, the map can be one of the maps 220, 240, 260, 280, 300, 320, 340, 360 shown in FIGS. 7-14 and the region can be one of the regions (226-232), 246, 266, 286, 306, 326, 346, 366 respectively.

An alert identification processor 460 is adapted to receive the verified detection signals 436 (in particular, the detection range values), the object relative velocity values 442, the host vehicle velocity values 456, and the predetermined region 450, and to generate an alert identification signal 462 if the detected object is within the predetermined detection zone (e.g., 24, FIG. 1) and if a point on the map associated with the object relative velocity signals 442 and host vehicle velocity signals 456 falls within the predetermined region 450.

It should be understood that, in other embodiments, the verified detection signals 436 need not be coupled to the alert identification processor 460. The verified detection signals 436 (in particular the verified detection range values) can be redundant with the relative velocity signals 442, for example, in the case where the relative velocity signals 442 are generated only for objects, which are known to be within the predetermined detection zone (e.g., 24, FIG. 1).

An alert generator 454 is adapted to receive the alert identification signal 462 and to generate an alert signal 468. The alert signal 468 can be in a variety of forms, including, but not limited to, a visual alert signal and an audible alert signal to an operator of a vehicle. The alert signal 468 makes an operator of a vehicle, for example, the vehicle 12 of FIG. 1, upon which the SOD radar 400 is mounted, aware of another vehicle to the side of the vehicle 12.

Functions of the detection processor 419, the detection verification processor 434, and the alert processor 438 can be performed by the signal processor 104 and/or the control processor 108 of FIG. 3, with any partitioning among the signal processor 104 and control processor 108.

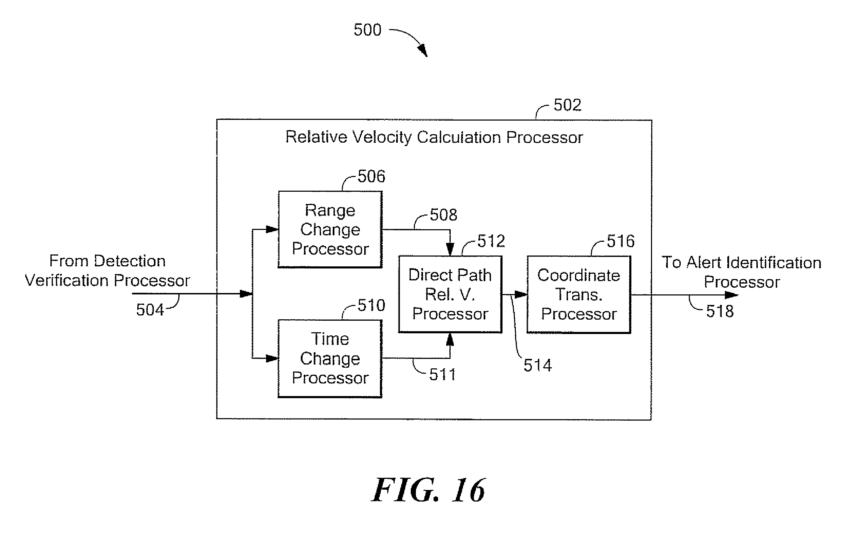

Referring now to FIG. 16, a relative velocity calculation processor 502 can be the same as or similar to the relative velocity calculation processor 440 of FIG. 15. The relative velocity calculation processor 502 can include a range change processor 506 and a time change processor, each adapted to receive verified detection signals, for example the verified detection signals 436 of FIG. 15. The range change processor is further adapted to generate range change values 508 and the time change processor 510 is further adapted to generate associated time change values 511.

A direct path relative velocity calculation processor 512 is adapted to generate direct path relative velocity signals 514 in response to the range change values 508 and the time change values 511. In one particular embodiment, the direct path relative velocity processor 512 divides the range change values 508 by the time change values 511 to generate the direct path relative velocity signals 514.

A coordinate transformation processor 516 is adapted to receive the direct path relative velocity signals 514 and to perform a coordinate transformation, resulting in above-described parallel path relative velocity values 518.

Having described preferred embodiments of the invention, it will now become apparent to one of ordinary skill in the art that other embodiments incorporating their concepts may be used. It is felt therefore that these embodiments should not be limited to disclosed embodiments, but rather should be limited only by the spirit and scope of the appended claims.

## Claims

1. A method of generating an alert associated with a radar system, comprising:
detecting an object when the object is within a predetermined detection zone to provide one or more detection range values indicative of ranges between the radar system and the object;
receiving a host vehicle velocity value indicative of a velocity of a host vehicle upon which the radar system is mounted
calculating a relative velocity value indicative of a relative velocity between the host vehicle and the detected object; and
combining the one or more detection range values, the relative velocity value, and the host vehicle velocity value to identify the alert.

2. The method of Claim 1, wherein the combining comprises:
generating a map of host vehicle velocities versus relative velocities, wherein the map has a map area;
selecting a region on the map, wherein the region has a region area less than the map area;
identifying a point on the map associated with the relative velocity value and with the host vehicle velocity value; and
generating the alert if the point is within the selected region.

3. The method of Claim 2, wherein the region is a polygonal region bounded by at least one of:
a first line segment having a first predetermined relative velocity value along the first line segment and a second line segment having a second predetermined relative velocity value along the second line segment; and
a line segment for which the relative velocity values along the line segment are equal to the opposite of the host vehicle velocity values plus a predetermined offset relative velocity value.

4. The method of Claim 2, wherein the map is a generally rectangular map, and the region includes a rectangular portion of the map.

5. The method of Claim 4, wherein the generally rectangular portion is bounded by a predetermined range of relative velocity values and a predetermined range of host vehicle velocity values.

6. The method of Claim 2, wherein the map is a generally rectangular map, and the region is a polygonal region bounded by a line segment having a host vehicle velocity value equal to zero along the line segment, a line segment having a predetermined relative velocity value along the line segment, a line segment having a predetermined host vehicle velocity value along the line segment, and a line segment for which the relative velocity values along the line segment are equal to the opposite of the host vehicle velocity values.

7. The method of Claim 2, wherein the map is a generally rectangular map, and the region is a polygonal region bounded by a line segment having a host vehicle velocity value equal to zero along the line segment, a line segment having a predetermined relative velocity value along the line segment, a line segment having a predetermined host vehicle velocity value along the line segment, and a line segment for which the relative velocity values along the line segment are equal to the opposite of the host vehicle velocity values plus a predetermined offset relative velocity value.

8. The method of Claim 2, wherein the map is a generally rectangular map, and the region is a polygonal region bounded by a line segment having a first predetermined host vehicle velocity value along the line segment, a line segment having a first predetermined relative velocity value along the line segment, a line segment having a second predetermined host vehicle velocity value along the line segment, and a line segment having a second predetermined relative velocity value along the line segment.

9. The method of Claim 2, wherein the map is a generally rectangular map, and the region is a polygonal region bounded by a line segment having a host vehicle velocity value equal to zero along the line segment, a line segment having a first predetermined relative velocity value along the line segment, a line segment having a first predetermined host vehicle velocity value along the line segment, a line segment having a second predetermined relative velocity value along the line segment, a line segment having a second predetermined host vehicle velocity value along the line segment, and a line segment having a third predetermined relative velocity value along the line segment.

10. The method of Claim 1, wherein the calculating the relative velocity value comprises combining a plurality of detection range values.

11. The method of Claim 1, wherein the calculating the relative velocity value comprises:
calculating a change in range associated with at least two of the detection range values;
calculating a change in time between the at least two detection range values; and
computing a direct path relative velocity by dividing the change in range by the change in time.

12. The method of Claim 1, wherein the calculating the relative velocity value comprises calculating a Doppler frequency shift.

13. The method of Claim 1, wherein detecting the object comprises:
transmitting a plurality of RF signals;
receiving a plurality of composite signals, each composite signal including at least one of a received RF signal and a noise signal, wherein each respective one of the composite signals is associated with a different one of a plurality of receive beams;
generating a respective detection state value associated with each of the receive beams, wherein each one of the detection state values is equal to a selected one of a first state value and a second state value, wherein the first state value is indicative of a detection of the object; and
for each of the detection state values equal to the first state value, generating a respective detection range value.

14. The method of Claim 13, wherein the transmitted RF signals comprise RF chirp signals.

15. Apparatus for generating an alert associated with a radar system, comprising:
a detection processor adapted to detect and object when the object is within a predetermined detection zone and to provide one or more detection range values indicative of ranges between the radar system and the object;
a transceiver adapted to receive a host vehicle velocity value indicative of a velocity of a host vehicle upon which the radar system is mounted;
a relative velocity calculation processor adapted to calculate a relative velocity value indicative of a relative velocity between the object and the host vehicle;
an alert identification processor adapted to combine the one or more detection range values, the host vehicle velocity value, and the relative velocity value, and to generate an alert identification signal indicative of the alert in response to the combination.

16. The apparatus of Claim 15, further including:
a map generation processor adapted to generate a map of host vehicle velocities versus relative;
a region selection processor adapted to select a region on the map, wherein the region has a region area less than the map area, wherein the alert identification processor is further adapted to combine the host vehicle velocity value and the relative velocity value to identify a point on the map; and
an alert generator adapted to generate the alert in response to the alert identification signal.

17. The apparatus of Claim 16, wherein the region is a polygonal region bounded by at least one of:
a first line segment having a first predetermined relative velocity value along the first line segment and a second line segment having a second predetermined relative velocity value along the second line segment; and
a line segment for which the relative velocity values along the line segment are equal to the opposite of the host vehicle velocity values plus a predetermined offset relative velocity value.

18. The apparatus of Claim 16, wherein the map is a generally rectangular map, and the region includes a generally rectangular portion or the map.

19. The apparatus of Claim 16, wherein the generally rectangular portion is bounded by a predetermined range of relative velocity values and a predetermined range of host vehicle velocity values.

20. The apparatus of Claim 16, wherein the map is a generally rectangular map, and the region is a polygonal region bounded by a line segment having a host vehicle velocity value equal to zero along the line segment, a line segment having a predetermined relative velocity value along the line segment, a line segment having a predetermined host vehicle velocity value along the line segment, and a line segment for which the relative velocity values along the line segment are equal to the opposite of the host vehicle velocity values.

21. The apparatus of Claim 16, wherein the map is a generally rectangular map, and the region is a polygonal region bounded by a line segment having a host vehicle velocity value equal to zero along the line segment, a line segment having a predetermined relative velocity value along the line segment, a line segment having a predetermined host vehicle velocity value along the line segment, and a line segment for which the relative velocity values along the line segment are equal to the opposite of the host vehicle velocity values plus a predetermined offset relative velocity value.

22. The apparatus of Claim 16, wherein the map is a generally rectangular map, and the region is a polygonal region bounded by a line segment having a first predetermined host vehicle velocity value along the line segment, a line segment having a first predetermined relative velocity value along the line segment, a line segment having a second predetermined host vehicle velocity value along the line segment, and a line segment having a second predetermined relative velocity value along the line segment.

23. The apparatus of Claim 16, wherein the map is a generally rectangular map, and the region is a polygonal region bounded by a line segment having a host vehicle velocity value equal to zero along the line segment, a line segment having a first predetermined relative velocity value along the line segment, a line segment having a first predetermined host vehicle velocity value along the line segment, a line segment having a second predetermined relative velocity value along the line segment, a line segment having a second predetermined host vehicle velocity value along the line segment, and a line segment having a third predetermined relative velocity value along the line segment.

24. The apparatus of Claim 15, wherein the relative velocity calculation processor is adapted to combine a plurality of detection range values.

25. The apparatus of Claim 15, wherein the relative velocity calculation processor comprises:
a range change processor adapted to calculate a change in range associated with at least two detection range values;
a time change processor adapted to calculate a change in time between the at least two detection range values; and
a direct path relative velocity processor adapted to compute a direct path relative velocity by dividing the change in range by the change in time.

26. The apparatus of Claim 15, wherein the relative velocity calculation processor comprises a Doppler processor adapted to compute a Doppler frequency shift.

27. The apparatus of Claim 15, wherein the detection processor comprises:
a radar transmitter adapted to transmit a plurality of RF signals;
a radar receiver adapted to receive a plurality of composite signals, each composite signal including at least one of a received RF signal and a noise signal, wherein respective each one of the composite signals is associated with a different one of a plurality of receive beams; and
a detection processor adapted to generate a respective detection state value associated with each of the receive beams, wherein each one of the detection state values is equal to a selected one of a first state value and a second state value, wherein the first state value is indicative of a detection of the object, and further adapted to generate a respective detection range value for each of the detection state values equal to the first state value.

28. The apparatus of Claim 27, wherein the transmitted RF signals comprise RF chirp signals.
